# EUROPÄISCHE PATENTANMELDUNG

(11) **EP 1 762 451 A1**
(43) Veröffentlichungstag der Anmeldung: **14.03.2007**
(21) Anmeldenummer: 06118892.6
(22) Anmeldetag: 14.08.2006
(51) Int. Cl.: B60W 10/06, B60W 10/30, B60W 10/26, B60W 30/18, B60K 6/04

(54) **Verfahren zur Verzögerungsregelung eines Kraftfahrzeugs**

(30) Priorität: 12.09.2005 DE 102005043370
(71) Anmelder: SIEMENS AKTIENGESELLSCHAFT, 80333 München (DE)
(72) Erfinder: Bauer, Erwin, 93138 Lappersdorf (DE); Ellmer, Dietmar, 93059 Regensburg (DE)

(57) **Zusammenfassung**

Die vorliegende Erfindung betrifft ein Verfahren zur Verzögerungsregelung eines Kraftfahrzeugs. Im Rahmen dieses Verfahrens werden durch Ladevorgänge im Kraftfahrzeug erzeugte Bremsmomente mit Hilfe einer gezielten Ansteuerung von Ladungswechselorganen kompensiert. Durch Festlegen der durch Ladevorgänge erzeugten Fahrzeugverzögerung auf einen bestimmten Sollwert wird dadurch ein komfortabler Betrieb des Kraftfahrzeugs realisiert.

## Beschreibung

Die vorliegende Erfindung betrifft ein Verfahren zur Verzögerungsregelung eines Kraftfahrzeugs, um die im Kraftfahrzeug umgewandelten und teilweise gespeicherten Energien optimiert nutzen zu können.

Moderne Kraftfahrzeuge sind mit einer Mehrzahl von elektrischen Verbrauchern ausgestattet. Diese umfassen beispielsweise heizbare Heck- und Frontscheiben, elektrische Fensterheber, Zusatzheizungen, Sitz- und Lenkradverstellungen sowie verschiedene Beleuchtungen. All diesen Verbrauchern ist gemeinsam, dass sie das elektrische Bordnetz des Kraftfahrzeugs belasten. Die erforderliche elektrische Leistung muss letztlich durch die Brennkraftmaschine selbst bereitgestellt werden, indem z.B. die Lichtmaschine bei Leistungsanforderung durch einen elektrischen Verbraucher der Brennkraftmaschine ein bestimmtes Drehmoment abverlangt.

Verschiedene Strategien zum Energiemanagement innerhalb des Kraftfahrzeugs gehören zum Stand der Technik. Kern dieser Strategien ist es, diejenigen Betriebsphasen der Brennkraftmaschine zu nutzen, die für die Energiebereitstellung, d.h. zum Laden von Energiespeichern, besonders effizient sind. Diese effizienten Betriebsphasen der Brennkraftmaschine sind die Schubphasen. Während dieser Schubphasen werden elektrische Energiespeicher, wie z.B. Akkumulatoren oder sogenannte Supercaps, mit Hilfe der Lichtmaschine geladen. Es ist prinzipiell ebenfalls vorstellbar, Energiespeicher jeder beliebigen Art, wie etwa auch mechanische Federn, während der Schubphase zu "laden". Es ist jedoch ein Nachteil, dass durch Aufladen der Energiespeicher während der Schubphase die Brennkraftmaschine durch ein Bremsmoment belastet wird, während beispielsweise beim Abbremsen des Kraftfahrzeugs ein zusätzliches Bremsmoment zur Energieeinsparung beitragen könnte.

Ein Energiemanagement zur Steuerung der obigen Ladungsprozesse ermöglicht es, die Brennkraftmaschine mit einem definierten Bremsmoment zu beaufschlagen. Die Ladungswechselschleife eines Ottomotors kann dabei ebenso als Bremsmoment interpretiert werden. Durch Steuerung von Ladungswechselorganen, wie etwa der Drosselklappe, der Drallklappe oder den Phasen- und Hubstellern, kann eine mehr oder weniger starke Drosselung bzw. Entdrosselung der Brennkraftmaschine erreicht werden, um das obige Bremsmoment zu überwinden.

Es ist die Aufgabe der vorliegenden Erfindung, ein Verfahren zur Verzögerungsregelung eines Kraftfahrzeugs bereitzustellen, mit dem eine Komfortsteigerung der Nutzung des Kraftfahrzeugs für den Fahrer als auch eine verbesserte Ausnutzung der im Kraftfahrzeug umgewandelten Energien möglich ist.

Die obige Aufgabe wird durch ein Verfahren zur Verzögerungsregelung eines Kraftfahrzeugs gemäß dem unabhängigen Patentanspruch 1 gelöst. Dieses Verfahren dient dazu, durch ein geschicktes Zusammenspiel von Entdrosselungsmaßnahmen der Brennkraftmaschine und Energiemanagement in allen Betriebsphasen der Brennkraftmaschine unabhängig vom Streckenprofil eine konstante Fahrzeugverzögerung zu realisieren. Die konstante Fahrzeugverzögerung führt zu einer Komfortsteigerung für den Fahrer im Vergleich zu bekannten Kraftfahrzeugen. Zudem werden gezielt irreversible Energie umwandelnde Prozesse, wie z.B. Bremsen durch den Fahrer, durch reversible Energie umwandelnde Prozesse, wie z.B. Laden und Entladen einer Batterie, ersetzt, indem das Bremsmoment von Ladungsprozessen gezielt in Verzögerungsphasen des Kraftfahrzeugs eingesetzt wird.

Das erfindungsgemäße Verfahren zur Verzögerungsregelung eines Kraftfahrzeugs umfasst die folgenden Schritte: Erfassen von Betriebsdaten des Kraftfahrzeugs zum Ermitteln seines Betriebszustands, Definieren eines Sollwerts einer Fahrzeugverzögerung aufgrund mindestens eines Ladevorgangs eines Energiespeichers im Kraftfahrzeug und Bestimmen der Fahrzeugverzögerung aufgrund des Ladevorgangs des mindestens einen Energiespeichers und Ansteuern eines Ladungswechselorgans des Kraftfahrzeugs derart, dass die Fahrzeugverzögerung mit dem Sollwert übereinstimmt, um einen komfortablen Betrieb des Kraftfahrzeugs zu realisieren.

Durch die obige Verzögerungsregelung im Kraftfahrzeug wird gewährleistet, dass das Kraftfahrzeug in seinen unterschiedlichen Betriebszuständen immer nur durch eine maximale, durch einen Sollwert festgelegte Fahrzeugverzögerung aufgrund von Ladevorgängen von Energiespeichern im Kraftfahrzeug belastet wird. Dies gestattet einen gleichförmigen Betrieb des Kraftfahrzeugs sowohl in Beschleunigungs- als auch in Verzögerungsphasen. Auch wenn im Kraftfahrzeug Ladevorgänge von Energiespeichern erforderlich sind, die eine Fahrzeugverzögerung größer als der festgelegte Sollwert erzeugen würden, wird diese Fahrzeugverzögerung durch eine gezielte Entdrosselung der Brennkraftmaschine ausgeglichen. In gleicher Weise erfolgt ein Ausgleich durch die Ladungswechselorgane des Kraftfahrzeugs, wenn Ladevorgänge der Energiespeicher eine Fahrzeugverzögerung geringer als der festgelegte Sollwert liefern sollten.

Gemäß einer Ausführungsform des Verfahrens zur Verzögerungsregelung wird während einer Schubphase des Kraftfahrzeugs die Fahrzeugverzögerung konstant gehalten.

Gemäß einer weiteren Ausgestaltung des Verfahrens zur Verzögerungsregelung erfolgt ein Erzeugen eines maximalen Ladevorgangs während der Schubphase der Brennkraftmaschine und ein Ausgleichen der den Sollwert übersteigenden Fahrzeugverzögerung durch eine Entdrosselung der Brennkraftmaschine des Kraftfahrzeugs.

Gemäß einer weiteren Ausführungsform des vorliegenden Verfahrens erfolgt ein Anpassen der Fahrzeugverzögerung durch Ladevorgänge in Abhängigkeit vom Betriebszustand des Kraftfahrzeugs, insbesondere bei Bergabfahrten und Berganfahrten des Kraftfahrzeugs, um durch Verstärken der Ladevorgänge im Kraftfahrzeug ein zusätzliches Abbremsen des Kraftfahrzeugs bei gleichzeitiger Energiegewinnung oder um durch Verringern der Ladevorgänge ein vermindertes Abbremsen des Kraftfahrzeugs zu erzielen. Es ist ebenfalls denkbar, in dem obigen Verfahren den Sollwert der Fahrzeugverzögerung in Abhängigkeit vom Betriebszustand des Kraftfahrzeugs zu definieren.

Die vorliegende Erfindung sowie ihre bevorzugten Ausführungsformen werden unter Bezugnahme auf die begleitende Zeichnung näher erläutert. Unterschiedliche Ausgestaltungen und Weiterentwicklungen der vorliegenden Erfindung gehen neben der Beschreibung auch aus den abhängigen Ansprüchen hervor. Die begleitende Figur zeigt ein Blockschaltbild zur Erläuterung der Funktionalität des Verfahrens zur Verzögerungsregelung des Kraftfahrzeugs.

Die unterschiedlichen Energiespeicher in einem Kraftfahrzeug können mit Hilfe eines Energiemanagements, z.B. einer Ladestromregelung, gezielt aufgeladen werden. Diese Ladevorgänge resultieren in ein definiertes Bremsmoment, mit dem die Brennkraftmaschine des Kraftfahrzeugs beaufschlagt wird. Je größer die geforderte Ladeleistung des Ladevorgangs ist, beispielsweise der Ladestrom, desto größer ist das Bremsmoment und damit die durch den Ladevorgang erzeugte wirksame Fahrzeugverzögerung. Variiert die Intensität der Ladevorgänge und somit die Fahrzeugverzögerung, beispielsweise in der Schubphase der Brennkraftmaschine, führt dies einerseits zu einem unkomfortablen und unerwünschten "Ruckeln" beim Betrieb des Kraftfahrzeugs. Andererseits möchte man, um Kraftstoff zu sparen, die Schubphasen der Brennkraftmaschine möglichst effizient zur Aufladung der Energiespeicher im Kraftfahrzeug nutzen. Dies hat zur Folge, dass in Abhängigkeit vom Ladezustand der Energiespeicher des Kraftfahrzeugs unterschiedlich und gegebenenfalls übermäßig stark während der Schubphase geladen wird, wodurch unterschiedlich starke Bremseffekte entstehen.

Diese Bremsmomente, die zu einem unkomfortablen Betrieb des Kraftfahrzeugs führen, werden durch das vorliegende Verfahren zur Verzögerungsregelung des Kraftfahrzeugs ausgeschaltet. Zu diesem Zweck werden zunächst die Betriebsdaten des Kraftfahrzeugs erfasst, um dessen Betriebszustand zu ermitteln. Diese Betriebsdaten umfassen Informationen über den Zustand der Brennkraftmaschine, die Getriebesteuerung und andere an die Brennkraftmaschine angeschlossene und den Betrieb des Kraftfahrzeugs bestimmende Systeme. Diese Betriebsdaten sind beispielsweise die Drehzahl N, die Öltemperatur der Brennkraftmaschine T_OIL, die Temperatur des Kühlmittels der Brennkraftmaschine T_Kühlmittel, die Position der variablen Nockenwellensteuerung VVT_Position und die Position der Drosselklappe DK_Position (vgl. Fig.). Diese Betriebsdaten werden beispielsweise nach dem Erfassen an die Motorsteuerung übermittelt und dort ausgewertet. Die Auswertung liefert den Betriebszustand und/oder einen Betriebs- oder Fahrmodus des Kraftfahrzeugs.

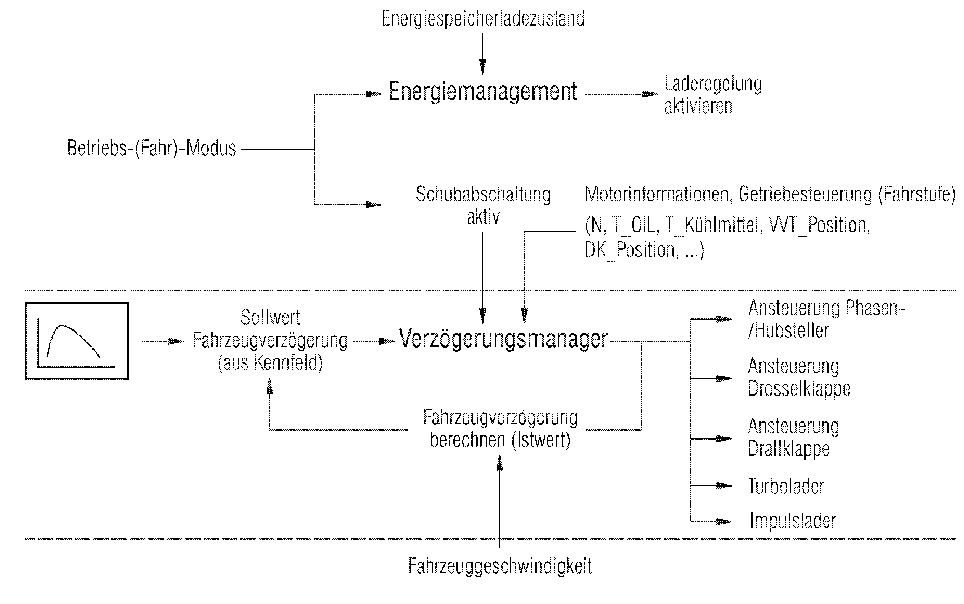

Die unterschiedlichen Energiespeicher im Kraftfahrzeug, wie beispielsweise die Batterie, Supercaps, mechanische Speichereinheiten oder hydraulische Speicherelemente, werden mit Hilfe eines Energiemanagements überwacht, gezielt geladen und wieder entladen, um angeschlossene Verbraucher mit Energie zu versorgen. Zu diesem Zweck übermitteln beispielsweise geeignete Sensoren den Energiespeicherladezustand an das Energiemanagement, um die Intensität von Ladevorgängen der Energiespeicher entsprechend regeln zu können. Das Energiemanagement verwaltet somit die Information, mit welcher Intensität Ladevorgänge an bestimmten Energiespeichern erforderlich sind und mit welchem Bremsmoment diese Ladevorgänge die Brennkraftmaschine des Kraftfahrzeugs belasten. Wie in der Figur gezeigt ist, wird bei einem erforderlichen Ladevorgang durch das Energiemanagement die Laderegelung des jeweiligen Energiespeichers aktiviert.

Damit die durch die unterschiedlichen Ladevorgänge erzeugten Bremsmomente eine geregelte Verzögerung des Kraftfahrzeugs erzeugen, wird das Energiemanagement in Kombination mit einem Verzögerungsmanager betrieben. In der begleitenden Figur ist die Zusammenarbeit von Energiemanagement und Verzögerungsmanager in der Betriebsphase einer Schubabschaltung der Brennkraftmaschine beispielgebend dargestellt. Eine derartige Schubabschaltung erfolgt bei Bergabfahrt des Kraftfahrzeugs, in der bereits die Hangabtriebskraft durch das Eigengewicht des Kraftfahrzeugs für einen ausreichenden Vortrieb sorgt. Um bei dieser Bergabfahrt des Kraftfahrzeugs ein unkomfortables Fahrgefühl für den Fahrer aufgrund der Zu- und Abschaltung von Ladevorgängen und den damit verbundenen Bremsmomenten zu vermeiden, wird zunächst ein Sollwert einer Fahrzeugverzögerung aufgrund mindestens eines Ladevorgangs eines Energiespeichers im Kraftfahrzeug definiert. Dieser Sollwert legt fest, dass die durch Ladevorgänge erzeugte Bremswirkung einen annähernd konstanten Wert annehmen soll, um die im Kraftfahrzeug stattfindenden Ladevorgänge der Energiespeicher für den Fahrer nicht mehr wahrnehmbar zu machen.

Im Vergleich zu diesem Sollwert werden die Bremsmomente und somit die Fahrzeugverzögerung bestimmt, die durch die vom Energiemanagement freigegebenen Ladevorgänge der aufzuladenden Energiespeicher generiert werden. Zur Vereinfachung der Bestimmung der Fahrzeugverzögerung aufgrund eines oder einer Mehrzahl von Ladevorgängen wird beispielsweise ein entsprechendes Kennfeld im Kraftfahrzeug, beispielsweise in der Motorsteuerung, abgelegt.

Im Verzögerungsmanager wird die tatsächlich durch die Ladevorgänge erzeugte Fahrzeugverzögerung mit dem festgelegten Sollwert für die Fahrzeugverzögerung verglichen. In Abhängigkeit vom Ergebnis des Vergleichs erfolgt ein Ansteuern mindestens eines Ladungswechselorgans des Kraftfahrzeugs derart, dass die tatsächlich erzeugte Fahrzeugverzögerung mit dem Sollwert übereinstimmt, um einen komfortablen Betrieb des Kraftfahrzeugs zu gewährleisten. Als Ladungswechselorgane werden beispielsweise durch den Verzögerungsmanager Phasen-/Hubsteller, eine Drosselklappe, eine Drallklappe, ein Turbolader und/oder ein Impulslader angesteuert. Ist beispielsweise die tatsächliche Fahrzeugverzögerung durch Ladevorgänge größer als der festgelegte Sollwert, steuert der Verzögerungsmanager über ein oder mehrere Ladungswechselorgane einen zusätzlichen Schub der Brennkraftmaschine an, so dass die den Sollwert übersteigende Fahrzeugverzögerung durch Ladevorgänge mittels dieses Schubs ausgeglichen wird. Diese Regelung des Verzögerungsmanagers wird überprüft, indem der Istwert der Fahrzeugverzögerung berechnet und mit dem Sollwert verglichen wird. In diesen Regelkreislauf geht ebenfalls die Geschwindigkeit des Kraftfahrzeugs ein.

Somit können im Zusammenspiel mit den Ladungswechselorganen die Unterschiede in den durch die Ladevorgänge erzeugten Bremsmomenten zu großen Teilen kompensiert werden. Hohe Bremsmomente durch Ladevorgänge werden neutralisiert, indem in Abhängigkeit vom Fahrprofil und entsprechend dem Generatorbremsmoment der Ladungswechsel angedrosselt, d.h. Schließen der Drossel-/Drallklappe, bzw. entdrosselt, d.h. Öffnen der Drossel-/Drallklappe, wird. Besonders vorteilhaft ist hier der Einsatz schnell zu stellender Komponenten, wie z.B. ein Impulslader oder ein elektrischer Nockenwellensteller, die die Phase und/oder auch den Ventilhub steuern. Auf diese Weise kann durch gezielten Eingriff in die Ventilsteuerzeiten, z. B. über die Strategie "spätes Einlass schließen - frühes Auslass öffnen", und/oder durch den gezielten Eingriff in den Ventilhub das Ladungswechselbremsmoment schnell und sensibel beeinflusst werden.

Es ist somit bevorzugt, während einer Schubphase der Brennkraftmaschine des Kraftfahrzeugs die Fahrzeugverzögerung konstant zu halten, um auf diese Weise ein komfortables Fahrgefühl hervorzurufen. Gemäß einer weiteren Ausführungsform des vorliegenden Verfahrens wird die durch Ladevorgänge generierbare Fahrzeugverzögerung an den Betriebszustand des Kraftfahrzeugs angepasst. Das bedeutet, dass in Abhängigkeit von einer Schubphase des Kraftfahrzeugs, beispielsweise eine Berganfahrt, oder einer Phase mit Schubabschaltung, beispielsweise eine Bergabfahrt, eine unterschiedlich starke Intensität von Ladevorgängen bzw. eine unterschiedlich starke Fahrzeugverzögerung freigegeben wird, um die Bremsmomente der Ladevorgänge gezielt in Betriebszuständen mit geforderter Bremswirkung des Kraftfahrzeugs einzusetzen. Auf diese Weise unterstützen die Ladevorgänge ein Abbremsen des Kraftfahrzeugs, während gleichzeitig die Bremsvorgänge zur Energiespeicherung eingesetzt werden. Auf diese Weise wird eine "Energievernichtung" durch Betätigen der Bremsen des Kraftfahrzeugs vermieden, bei dem kinetische Energie in nicht weiter für das Kraftfahrzeug nutzbare Wärme umgewandelt wird. Dadurch werden irreversible Energieumwandlungsvorgänge durch reversible Energieumwandlungs- und Energiespeichervorgänge ersetzt. Während die vermehrte Zuschaltung von Ladevorgängen zu einem unterstützenden und energetisch günstigen Abbremsen des Kraftfahrzeugs führt, kann ebenfalls eine verringerte Intensität von Ladevorgängen während einer Schubphase der Brennkraftmaschine zu einer Energieeinsparung führen.

Die obige Anpassung der Fahrzeugverzögerung durch Ladevorgänge an den Betriebszustand des Kraftfahrzeugs kann ebenfalls dadurch realisiert werden, dass der Sollwert der Fahrzeugverzögerung in Abhängigkeit vom Betriebszustand des Kraftfahrzeugs variiert bzw. definiert wird. Auf diese Weise wird in der Größe des Sollwerts, der als Funktion wählbarer Betriebsgrößen der Brennkraftmaschine dem Betriebszustand der Brennkraftmaschine ständig angepasst wird, ein komfortabler Betrieb des Kraftfahrzeugs und eine umweltbewusste Energieausnutzung vorbereitet und in Kombination mit dem Energiemanagement und dem Verzögerungsmanager umgesetzt.

Durch das obige Verfahren zur Verzögerungsregelung des Kraftfahrzeugs wird somit das Kraftfahrzeug unabhängig vom Fahrprofil, d.h. der zurückgelegten Fahrstrecke mit Steigungen und Gefälle, in der Schubphase immer konstant verzögert, was den Fahrkomfort steigert. Diese Verzögerung reicht bei steilem Gefälle nicht aus, um das Kraftfahrzeug auf konstanter Geschwindigkeit zu halten. Durch die Möglichkeit der Phasenverstellung bei frühem Öffnen der Auslassventile kann aber ein nennenswertes Zusatzbremsmoment aufgebaut werden, nämlich dadurch, dass eine verringerte Expansionsarbeit zur Kolbenbeschleunigung verrichtet wird. Dadurch werden ebenfalls die Bremsen des Kraftfahrzeugs geschont.

Ein weiterer Komfortgewinn wird dadurch realisiert, dass das Kraftfahrzeug bei betriebskalter und betriebswarmer Brennkraftmaschine trotz unterschiedlicher Reibungsverhältnisse, d.h. Viskositätsunterschiede von heißem und kaltem Motoröl, gleichermaßen verzögert wird. Des Weiteren kann in den Schubphasen der Brennkraftmaschine ein stets hoher bis maximaler Ladestrom gefahren werden, ohne dass das Kraftfahrzeug übermäßig stark abgebremst wird, da das Bremsmoment durch Entdrosselung kompensiert werden kann. Dies kommt letztlich dem Kraftstoffverbrauch zugute. Des Weiteren können schnelle Momentenänderungen an der Brennkraftmaschine durch schnelle Ladungswechselorgane (siehe oben) kompensiert werden. Irreversible Prozesse, wie beispielsweise das oben genannte Bremsen, werden durch reversible Prozesse ersetzt, wie beispielsweise das Laden von Energiespeichern, wodurch Verschleiß vermindert und Energie eingespart wird. Ein besonderer Vorteil ergibt sich bei Kraftfahrzeugen mit Automatikgetriebe. Bei Bergabfahrten schalten konventionelle Automatikgetriebe in immer höhere Gänge und werden dabei immer schneller, was meist noch mit einem unkomfortablen und unangenehmen Ruckeln verbunden ist. In Abstimmung mit der Getriebesteuerung kann einerseits die Kraftfahrzeugbeschleunigung bei Bergabfahrt kontrolliert werden und zum anderen kann durch gezielten Einsatz der Drosselorgane das Ruckeln vermindert und damit ein deutlicher Komfortgewinn erzielt werden.

## Patentansprüche

1. Verfahren zur Verzögerungsregelung eines Kraftfahrzeugs mit den folgenden Schritten:
a.Erfassen von Betriebsdaten des Kraftfahrzeugs zum Ermitteln seines Betriebszustands,
b.Definieren eines Sollwerts einer Fahrzeugverzögerung aufgrund mindestens eines Ladevorgangs eines Energiespeichers im Kraftfahrzeug und Bestimmen der Fahrzeugverzögerung aufgrund des Ladevorgangs des mindestens einen Energiespeichers, und
c.Ansteuern eines Ladungswechselorgans des Kraftfahrzeugs derart, dass die Fahrzeugverzögerung mit dem Sollwert übereinstimmt, um einen komfortablen Betrieb des Kraftfahrzeugs zu realisieren.

2. Verfahren gemäß Anspruch 1, in dem während einer Schubphase des Kraftfahrzeugs die Fahrzeugverzögerung konstant gehalten wird.

3. Verfahren gemäß Anspruch 2, mit dem weiteren Schritt:
a.Erzeugen eines maximalen Ladevorgangs während der Schubphase und
b.Ausgleichen der den Sollwert übersteigenden Fahrzeugverzögerung durch eine Entdrosselung einer Brennkraftmaschine des Kraftfahrzeugs.

4. Verfahren gemäß Anspruch 1, mit dem weiteren Schritt:
Anpassen der Fahrzeugverzögerung durch Ladevorgänge in Abhängigkeit vom Betriebszustand des Kraftfahrzeugs, insbesondere bei Bergabfahrten und Berganfahrten des Kraftfahrzeugs, um durch Verstärken der Ladevorgänge im Kraftfahrzeug ein zusätzliches Abbremsen des Kraftfahrzeugs bei gleichzeitiger Energiegewinnung oder um durch Verringern der Ladevorgänge ein vermindertes Abbremsen des Kraftfahrzeugs zu erzielen.

5. Verfahren gemäß Anspruch 4, in dem der Sollwert der Fahrzeugverzögerung in Abhängigkeit vom Betriebszustand des Kraftfahrzeugs definiert wird.
